# EUROPEAN PATENT APPLICATION

(11) **EP 3 427 821 A1**
(43) Date of publication of application: **16.01.2019**
(21) Application number: 17020309.5
(22) Date of filing: 14.07.2017
(51) Int. Cl.: B01J 23/00, B01J 35/04, B01J 35/10, C01B 3/32, C10G 2/00

(54) **CATALYTIC COMPOSITION FOR CO2 CONVERSION**

(71) Applicant: AZAD Pharmaceutical Ingredients AG, 8200 Schaffhausen (CH)
(72) Inventor: FRECH NABOLD, Christian, 8614 Bertschikon (CH); BARONIAN, Mike, 3125 Toffen (CH); AVETISYAN KAJIKI, Ashot, Yerevan (AM)
(74) Representative: Althaus, Roland

(57) **Abstract**

The present invention relates to a catalytic composition comprising at least 7 different elements selected from the group consisting of the elements defined by the intersection of the second to the sixth period and the first to the sixteenth group of the periodic table of the elements, whereby technetium is excluded, and a matrix component. A method for use of the catalytic composition is also provided.

## Description

The present invention relates to a method for the conversion of CO₂ to synthesis gas and hydrocarbon compounds and a catalytic composition.

Fossil fuels have been playing an important role in the generation of energy. Energy consumption has increased constantly over the last decades. As consequence, the dependency on fossil fuels was reinforced and energy generation led to a dramatic increase in the release of the greenhouse gas CO₂ into the atmosphere. Enormous volumes in the range of billions of tons of CO₂ are emitted to the atmosphere and the trend is still increasing. Meanwhile, more and more evidence emerged that this man-made emission of CO₂ is at least partly influencing changes in climate and weather such as suddenly changing conditions, e.g. flood and drought. Furthermore, large amounts of CO₂ are emitted during iron smelting as well as the production of concrete. Therefore, it is highly desirable to uncouple economic growth from the fossil fuel based energy generation and CO₂ emissions caused thereby. This to avoid potentially dangerous climate and weather changes that may not be reversible. Multiple attempts have been made to capture and utilize carbon dioxide but they lack efficiency and / or require drastic conditions to obtain sufficient conversion of the little reactive CO₂.

One suitable way to reduce CO₂ represents the conversion of CO₂ to useful chemicals. Indeed, this could be one of the best ways to reduce the global emissions on one side and produce valuable products on the other side. CO₂ represents an abundant and valuable source of carbon that can be used alternatively to usage of fossil fuels. This could potentially contribute to a significant reduction in the greenhouse gas CO₂ and thus obviate undesired changes in climate and weather.

Nowadays, fossil fuels still make up more than 80% of the world's energy sources. In addition, the chemical industry heavily uses fossil fuels as 95% of the organic-based chemicals are derived from non-renewable sources such as fossil fuels. Complete chemical industry branches solely rely on fossil raw materials, namely the petrochemical and synthetic polymers industry. There is an urgent need in transitioning chemical and energy industry primarily depending on fossil fuels away to non-fossil or at least less fossil fuel consuming resources. This is also a reason as to the increasing importance of readily available CO₂ as a source for synthetic fuels and base chemicals and further chemical products. Most importantly, using CO₂ as a source for carbon would allow reducing man-made CO₂ emissions itself. The processes by which CO₂ utilization may reduce pertinent emissions are basically CO₂ capture and subsequent (longterm) storage, e.g. by mineralization or subsequent use of captured CO₂ as a source for carbon. The latter also decreases the need of using fossil fuel as a carbon source for base chemical compounds. A main focus in the CO₂ utilization field lies on the development of efficient chemical methods for capturing and subsequent using CO₂.Catalysts are sought to be more efficient at lower costs, lower material consumption or waste production. There is a need for the development of highly efficient catalysts that allow conversion of preferably unpurified CO₂ containing gas streams originating from industrial flue gases, such as cement, steel or further energy consuming industries, in the production of synthetic fuel or base chemicals that are further used in synthesis. As a very welcome consequence this would reduce the present dependency on fossil fuels. Direct conversion of CO₂ into base chemicals or chemical building blocks is therefore of great importance since this allows exploiting a more sustainable and readily available carbon source such as CO₂.

Many catalysts employed in CO₂ utilization are optimized in terms of good yields and accelerated reactions and thus improve the process of CO₂ utilization. However, the development of catalysts which require less purified or non-purified CO₂ streams, catalysts able to tolerate nitrogen, water, SOₓ and NOₓ compounds in a typical flue gas, and which are also efficient at low CO₂ concentrations would specifically be highly beneficial. As the ability to utilize variable composition streams of CO₂ directly from industrial processes without the need of purification of the gas streams prior to their use, would achieve a significant economic and environmental improvement of the overall process.

Methane is the main component of natural gas and its significance as a fossil fuel increased due to its advantageously low carbon-hydrogen ratio and its versatility in possible end uses. In addition to oil and coal it is the third most used fossil fuel at a global level employed for heating, in the energy sector and as a feedstock for the chemical sector. Further, it is more and more often used as a transport fuel. Methane is synthesized by Sabatier reaction from CO₂ or CO and H₂ at higher temperatures (300° to 700°C) in the presence of nickel or ruthenium containing metal catalysts and may be directly fed into the natural gas network where it can partly replace the fossil methane. The existing infrastructure for natural gas (pipeline network, storage facilities and end use devices) may be used without further modification. The use of H₂ for the reduction of carbon dioxide calls for cheap and efficient sources of hydrogen. Expensive or laborious methods for producing H₂ significantly lower the benefits of CO₂ or CO conversion processes into synthetic fuels and base or building block chemicals. A variety of different technologies is at hand that may be used for hydrogen production, e.g. water electrolysis which is, however, costly. Thus, a cheap and efficient way for producing H₂ is of utmost importance. From an economic and ecologic point of view, the development of an efficient catalyst allowing thermal reduction of both, dilute and non-purified CO₂ streams, e.g. into synthetic fuel and water vapor into H₂, and hence, the direct conversion of CO₂ into value-added chemicals within one operational device, promoted by a simple and cheap catalyst system and without the need of expensive separate electrolysis of water is highly desirable.

DE 10 2006 035 893 describes a method for the conversion of combustion products into CO and subsequently by adding H₂ produced by electrolysis into methanol and further hydrogen carbon compounds.

DE102009014728 describes the conversion of CO₂ with CH₄ to syngas under support of pulsed electrochemical energy at moderate temperatures. However, this process is classified as reforming process using CH₄ as reducing agent and requires additional electrochemical energy.

DE69518550 describes the conversion of CO₂ with H₂ in presence of a Fe-K/Al₂O₃ catalyst to generate C₂₊hydrocarbons at 1-100 bar, 200-500°C and 500-20000 h⁻¹ volume velocity. However, this reaction requires the presence of separately produced hydrogen as reducing agent.

DE 698 10 493 discloses a process for the manufacture of, inter alia, alcohols and hydrocarbons from syngas, and relates to metal catalysts based on manganese or magnesium and further alkaline earth metals or alkali metals for use in the process in which molecules having two or more, especially four or more, carbon atoms are provided from carbon monoxide and hydrogen. The production of syngas from CO₂ again requires separately produced hydrogen as reducing agent.

Steinfeld et al., energy & fuels, 2012, 26, 7051 - 7059, report solar-driven thermochemical cycles on metal oxide redox reaction to split water and CO₂ to produce H₂ and CO at temperature far above 1000°C and require solar energy support.

The object of the present invention is to provide a highly efficient catalyst for the conversion of CO₂ into synthesis gas and further lower molecular organic compounds eliminating the drawbacks of prior art catalysts. A method for use of the catalyst is also provided.

The object is achieved by a catalytic composition according to claim 1 and a method according to claim 6. Further preferred embodiments are subject to dependent claims.

A catalytic composition according to the present invention comprises at least seven different elements. The elements are selected from the group consisting of the elements defined by the intersection of the second to the sixth period and the first to the sixteenth group of the periodic table of the elements, whereby technetium is excluded. The numbering of the periods corresponds to the current IUPAC standard. The catalytic composition further comprises a matrix component. It will be understood that in the catalyst the metallic elements may be in elemental form or they may be in the form of compounds, e.g., their oxides, or as mixtures of the metals in elemental form and compounds of the metals.

In a preferred embodiment, the matrix is a porous matrix. A higher porosity increases the surface to weight ratio and thus the contact surface for the compounds reacting with the catalyst.

In another preferred embodiment, the matrix of the catalytic composition has a surface to weight ratio of at least 40 m²/g.

Preferably, the at least one matrix component of the catalytic composition is selected from the group consisting of natural aluminosilicates, synthetic aluminosilicates, zeolites, vermiculite, activated carbon, obsidian, titanium oxide, aluminum oxide, and mixtures thereof. More preferred are the components vermiculite and obsidian, and most preferred mixtures thereof.

In another embodiment, the at least 7 elements of the catalytic composition are selected from the group consisting of Al, C, Cd, Ce, Co, Cr, Cu, Eu, Fe, Gd, Mo, Mo, Na, Nd, Ni, O, and Sm. Again, the metal elements in the catalyst may be in elemental form or they may be in the form of compounds, e.g., their oxides, or as mixtures of the metals in elemental form and compounds of the metals. Catalytic compositions which comprise combinations of these elements achieve particularly good results in the conversion of CO₂.

Catalytic compositions according to the present invention can be regenerated when they have reached their lifetime which is approximately 10'000 hours. Regeneration of the catalytic composition is achieved by thermal treatment with dry gas steam at a temperature of 300°C or higher for one hour.

A method for preparing synthesis gas and hydrocarbon compounds from a CO₂-containing gas comprises the following steps: First, the CO₂-containing gas is mixed with water vapor. Second the mixture of CO₂-containing gas and water vapor are subsequently contacted with a catalytic composition according to the present invention. Usually, the catalytic composition is heated to the desired process temperature. Synthesis gas, is a fuel gas mixture consisting primarily of hydrogen, carbon monoxide, and very often some carbon dioxide. Hydrocarbon compounds that are produced are mainly methane and ethane.

In a preferred embodiment, the method is carried out at a temperature below 250°C, preferably a temperature in the range of 100°C to 180°C, preferably in the range of 120°C to 160°C and most preferably in the range of 130°C to 150°C. The method is advantageously carried out at lower temperatures as this decreases energy consumption required for the heating of the reaction mixture and the catalytic composition.

In another embodiment, the method is carried out at low pressure, preferably at below 10 bars, more preferably in the range of 0.1 to 2 bar. Carrying out the reaction at lower pressures simplifies requirements regarding the equipment, the apparatus used.

Advantageously, the sources for the CO₂-containing gas that may be used in the method according to the present invention are numerous and different. A preferred source for CO₂-containing gas is exhaust gas of a combustion process. Other sources, such as exhaust gases of power plants or cement plants may also be used. Most advantageously, the CO₂-containing gas may be unpurified exhaust gas. Thus, no tedious purification steps, for instance the separation of sulfur or nitrogen containing compounds, is necessary.

However, the CO₂-containing gas can also be submitted to the reaction as gas mixture diluted with further gases such as nitrogen, oxygen, argon and sulfur oxides.

In a further embodiment, the heat energy of the CO₂-containing gas is employed to carry out the catalytic reaction. For instance, the heat energy of exhaust gases originating from combustion processes can be employed to heat the catalytic composition as well as the production of water vapor. In addition, the heat energy of such exhaust gases is also sufficient to maintain the required process temperature.

Advantageously, the conversion rate for the conversion of CO₂ to flammable gases is more than 30%, more preferably more than 50% or even more preferably more than 95%.

An apparatus for conducting the method according to the present invention comprises an inlet pipe for CO₂-containing gas to the reaction system and a water inlet pipe. It further comprises an optionally heating device which is used for the generation of water vapor. In parallel the heating device also serves for heating the catalytic composition. A reaction vessel comprises the catalytic composition, and an outlet pipe serves for discharging the reaction products. The reaction vessel is flow-connected with the inlet pipes and the outlet pipe.

In a preferred embodiment, the reaction vessel is a single chamber reactor or plug flow reactor.

In another embodiment, there are at least two catalytic compositions comprising different elements. These different catalytic compositions are preferably arranged in series for instance in a plug flow reactor. It is further possible to arrange more than two different catalytic compositions in series. This serial arrangement of several different catalytic compositions advantageously allows to increase efficiency of the conversion and to direct the main products of the conversion.

The method for the conversion of CO₂ and the apparatus for conducting the method according to the present invention are explained in more detail below with reference to exemplary embodiments in the drawings, in which, purely schematically:
Fig. 1 shows a flow chart of the method according to the present invention;
Fig. 2 shows an apparatus for conducting the method according to the present invention;

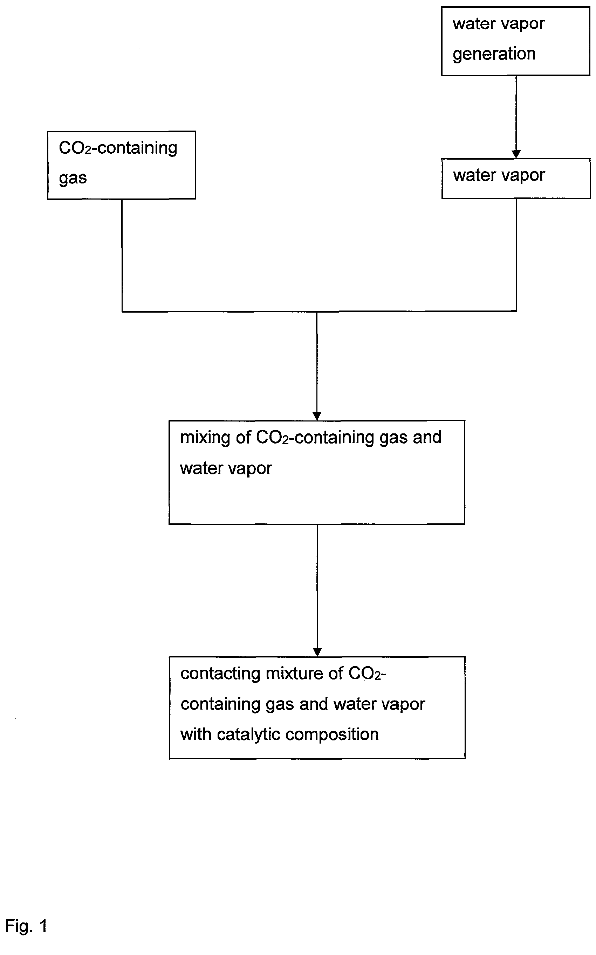

Fig. 1 shows a flow chart depicting the steps of the method. In a first step water is heated to generate water vapor. The water vapor is then mixed with the CO₂-containing gas which mixture is subsequently contacted with the heated catalytic composition.

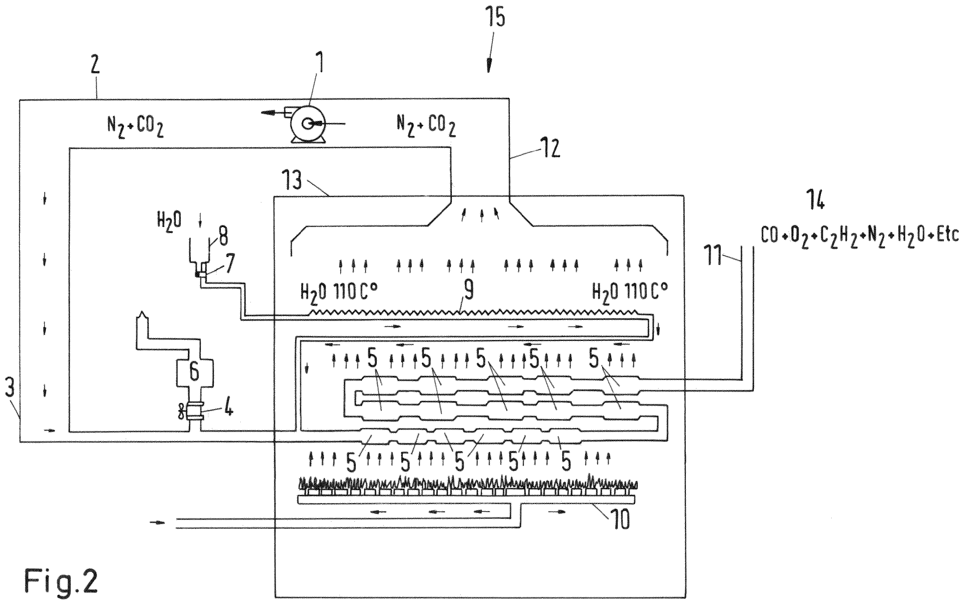

Fig. 2 shows an apparatus for conducting the method according to the present invention. The apparatus 15 comprises a heater 10, said heater 10 is used for heating the catalytic composition 5 that is arranged at regular intervals in a plug flow reactor. The heater 10 is also used to heat water which is fed from a water barrel 8 to a spiral shaped pipe 9. By heating the water in the spiral shaped pipe 9 water vapor is generated. The exhaust pipe 12 collects the exhaust gases of the heater 10 that serve as a CO₂-containing gas, said CO₂-containing gas is pumped by mean of a gas pump 1 through pipes 2 and 3 where the gas stream passes a pressure controller 6 connected to the pipe 3 via a valve 4. Before the CO₂-containing gas enters the plug-flow reactor it passes an inlet where the generated water vapor is mixed with the CO₂-containing gas. In the plug flow reactor, the mixture of CO₂-containing gas and water vapor is contacted with the heated catalytic mixture. Finally, the reaction mixture comprising the product compounds passes to an outlet pipe 11 where it may be collected for further purification or use.

In the following examples of the catalytic composition according to the present invention are described in more detail. The following examples show different catalyst compositions. All catalyst compositions were tested for their activity in converting CO₂ in exhaust gases to synthesis gas and/or hydrocarbons. The catalytic composition comprises the matrix components and the catalyst components. Amounts of the different compounds are given weight-% of the catalytic composition.

| | **Example 1** | **Example 2** | **Example 3** | **Example 4** | **Example 5** |
|---|---|---|---|---|---|
| **Al₂O₃** | 12.0 | 15.0 | 8.0 | 4.0 | 0.0 |
| **C** | - | - | - | 10.0 | - |
| **Cd** | - | - | - | 2.0 | 1.0 |
| **Ce** | - | 5.0 | - | 3.0 | 2.0 |
| **Co** | - | - | 10.0 | - | 10.0 |
| **Cr₂O₃** | 8.0 | 8.0 | 4.0 | - | 3.0 |
| **Cu** | 7.0 | 10.0 | 6.0 | 3.0 | 3.0 |
| **Eu** | 0.5 | - | - | - | - |
| **FeO** | - | 6.0 | **-** | - | - |
| **Fe₂O₃** | - | - | - | - | 20.0 |
| **Fe₃O₄** | - | - | - | 12.0 | - |
| **Gd** | 1.5 | - | - | - | - |
| **MoO₃** | - | 16.0 | 3.0 | - | - |
| **Mo₃O₇** | 10.0 | - | - | 3.0 | - |
| **NaOH** | - | - | - | 8.0 | - |
| **Nd** | - | - | 2.0 | - | - |
| **Ni** | 5.0 | - | - | - | 10.0 |
| **NiO** | 5.0 | 10.0 | 18.0 | 5.0 | - |
| **Sm** | 1.0 | - | 2.0 | - | 1.0 |
| **Obsidian** | 25.0 | 30.0 | 47.0 | 30.0 | - |
| **Vermiculit e** | 25.0 | - | - | 20.0 | 50.0 |

The catalytic compositions of examples number 1 to 5 were subsequently placed in a plug flow reactor and tested for their catalytic activity in converting CO2-containing gas streams into synthesis gas and/or other hydrocarbon compounds. The reactor was heated to 140°C. CO2-containing gas and water vapor were mixed in the reactor and subsequently contacted with the catalytic composition. Samples of the gas stream were collected at the outlet pipe and subsequently analyzed.

| **Example** | **Gas stream at outlet (components given in weight-%)** | | | | | |
|---|---|---|---|---|---|---|
| | **H₂** | **CO** | **CrO₂** | **H₂O** | **CH₄** | **C₂H₄** |
| **1** | 70 | 10 | 14 | 3 | 2 | 1 |
| **2** | 11 | 11 | 65 | 10 | 2 | 1 |
| **3** | 16 | 8 | 42 | 29 | 4 | 1 |
| **4** | 46 | 16 | 10 | 15 | 12 | 1 |
| **5** | 63 | 7 | 15 | 10 | 4 | 1 |

Yet in other experiments also further reaction products are found in various concentration. These additional products are for example, but not limited to Methanol, Ethanol, Acetylene, Benzene and Formaldehyde.

## Claims

1. Catalytic composition comprising at least 7 different elements selected from the group consisting of the elements defined by the intersection of the second to the sixth period and the first to the sixteenth group of the periodic table of the elements, whereby technetium is excluded, and a matrix component.

2. Catalytic composition according to claim 1, whereby the matrix is a porous matrix.

3. Catalytic composition according to any of claim 1 or 2, whereby the matrix has a surface to weight ratio of at least 40 m²/g

4. Catalytic composition according to any one of the preceding claims, whereby the at least one matrix component is selected from the group consisting of natural aluminosilicates, synthetic aluminosilicates, zeolites, vermiculite, activated carbon, obsidian, titanium oxide, aluminum oxide, and mixtures thereof.

5. Catalytic composition according to any one of claims 1 to 4, whereby the at least 7 elements are selected from the group consisting of Al, C, Cd, Ce, Co, Cr, Cu, Eu, Fe, Gd, Mo, Mo, Na, Nd, Ni, O, and Sm.

6. Method for preparing synthesis gas and hydrocarbon compounds from a CO2-containing gas comprising the steps of mixing the CO₂-containing gas with water vapor and subsequently contacting the mixture with a catalytic composition according to any one of claims 1 to 5.

7. Method according to claim 6, whereby the method is carried out at a temperature below 250°C, preferably a temperature in the range of 100°C to 180°C, preferably in the range of 120°C to 160°C and most preferably in the range of 130°C to 150°C.

8. Method according to any of claims 6 or 7, whereby the method is carried out at low pressure, preferably at below 10 bars, more preferably in the range of 0.1 to 2 bar.

9. Method according to any one of claims 6 to 8, whereby the CO₂-containing gas is exhaust gas of a combustion.

10. Method according to any one of claims 6 to 8, whereby the CO₂-containing gas is exhaust gas of a power plant, smelting plant or cement plant.

11. Method according to any one of claims 6 to 8, whereby the CO₂-containing gas is unpurified exhaust gas.

12. Method according to any one of claims 6 to 8, whereby the heat energy of the CO₂-containing gas is employed to carry out the catalytic reaction.

13. Method according to any one of claims 6 to 8 for conversion of CO₂ to flammable gases wherein the conversion rate is more than 30%, more preferably more than 50% or even more preferably more than 95%.

14. Apparatus for conducting the method according to any one of the claims 6 to 13 comprising an inlet pipe CO₂-containing gas, a water inlet pipe, a heating mean for generating water vapor and heating a catalytic composition, a reaction vessel comprising the catalytic composition, and an outlet pipe for discharging the reaction products, whereby the reaction vessel is flow-connected with the inlet pipes and the outlet pipe.

15. Apparatus according to claim 14, whereby the reaction vessel is a single chamber reactor or plug flow reactor.
